# EUROPÄISCHE PATENTSCHRIFT

(11) **EP 1 676 772 B1**
(45) Veröffentlichungstag und Bekanntmachung des Hinweises auf die Patenterteilung: **15.09.2010**
(21) Anmeldenummer: 05027046.1
(22) Anmeldetag: 10.12.2005
(51) Int. Cl.: B62D 55/084, B07B 1/00

(54) **Arbeitsmaschine, insbesondere Siebmaschine**
Working machine, in particular sieving machine
Machine, en particulier séparateur

(30) Priorität: 30.12.2004 DE 102004063367
(43) Veröffentlichungstag der Anmeldung: 05.07.2006
(73) Patentinhaber: Backers Maschinenbau GmbH, 49767 Twist (DE)
(72) Erfinder: Backers, Heinz, 49767 Twist (DE)
(74) Vertreter: Heiland, Karsten

(56) Entgegenhaltungen:
- EP-A- 0 261 279
- WO-A-01/34314
- DE-B- 1 192 931
- DE-U1- 8 814 333
- US-A- 4 541 498

## Beschreibung

Die Erfindung betrifft eine Arbeitsmaschine, insbesondere Siebmaschine, mit Räderfahrwerk und als oder mit einem Auflieger für eine Sattelzugmaschine, sowie mit einem zusätzlichen Raupenfahrwerk, wobei der Auflieger zwei zueinander in der Höhe versetzte Ebenen (Teilrahmen) aufweist.

Bekannt ist die Anordnung einer Siebmaschine auf einem Auflieger mit Räderfahrwerk. Eine Sattelzugmaschine zieht den Auflieger an den Einsatzort. Dort wird der Auflieger abgekoppelt und steht dann in seinem hinteren Bereich auf dem Räderfahrwerk und am vorderen Ende auf ausgefahrenen Stützen. Die Mobilität des Aufliegers ist dabei stark eingeschränkt.

Aus der gattungsbildenden DE-U 88 24 333 ist eine Zerkleinerungsanlage auf einem Sattelanhänger mit zwei zueinander in der Höhe versetzten Ebenen bekannt. Zusätzlich zum Räderfahrwerk können seitliche Raupenfahrwerke montiert werden.

Einen Anhänger, aber nicht als Auflieger für eine Sattelzugmaschine, zeigt die EP-A-0 261 279. Zusätzlich zu einem Räderfahrwerk ist ein mittleres Raupenfahrwerk schwenkbar gehalten.

Die erfindungsgemäße Arbeitsmaschine soll eine möglichst hohe Mobilität aufweisen.

Die erfindungsgemäße Arbeitsmaschine weist die Merkmale des Anspruchs 1 auf und ist mit einem zusätzlichen Raupenfahrwerk versehen, welches insbesondere relativ zum Räderfahrwerk in der Höhe verstellbar ist. Bevorzugt ist dabei ein in der Höhe starres Räderfahrwerk, sodass ausschließlich das Raupenfahrwerk verstellt wird. Mit dem zusätzlichen Raupenfahrwerk wird die Standfläche der Arbeitsmaschine erweitert und zugleich die Bewegbarkeit erhöht. Das Raupenfahrwerk kann selbstfahrend sein, beispielsweise durch einen ohnehin vorgesehenen, insbesondere hydraulischen Antrieb der Arbeitsmaschine. Vorzugsweise geht die Höhenverstellung soweit, dass nur eines der beiden Fahrwerke Bodenkontakt hat. Möglich ist aber auch die Nutzung beider Fahrwerke zugleich.

Nach einem weiteren Gedanken der Erfindung ist das Raupenfahrwerk etwa unter dem Schwerpunkt der Arbeitsmaschine angeordnet. Dadurch ist die Arbeitsmaschine durch das Raupenfahrwerk autark bewegbar, auch entlang von Kurven. Bei Verwendung eines Aufliegers dient das Räderfahrwerk für die Fortbewegung im Straßenverkehr und ist vom Schwerpunkt entfernt angeordnet, da ein weiterer Auflagepunkt an der Sattelzugmaschine vorliegt. Nach dem Abkoppeln von der Sattelzugmaschine wird die Arbeitsmaschine dann vorzugsweise nur noch mit Hilfe des abgesenkten und im Schwerpunktsbereich angeordneten Raupenfahrwerks bewegt.

Nach einem weiteren Gedanken der Erfindung ist das Raupenfahrwerk verstellbar aus einer vorderen, angehobenen Position in eine hintere, abgesenkte Position. Der Begriff "vordere Position" bezieht sich auf die Hauptfahrtrichtung der Arbeitsmaschine bzw. des Raupenfahrwerks. Vorzugsweise ist dann die vordere Position des Raupenfahrwerks vom Räderfahrwerk weiter abgewandt als die hintere, abgesenkte Position.

Nach einem weiteren Gedanken der Erfindung ist das Raupenfahrwerk durch Schwenkbewegung von mindestens zwei Hebeln höhenverstellbar. Vorzugsweise sind parallelogrammartig angeordnete Hebel vorgesehen, insbesondere zwei Hebelpaare.

Nach einem weiteren Gedanken der Erfindung ist das Raupenfahrwerk durch zumindest auf Druck beanspruchbare Verstellelemente höhenverstellbar. Diese können zugleich auch als Zugelemente ausgebildet sein. Bevorzugt sind hydraulische Kolben-ZylinderEinheiten, beispielsweise zwei zueinander parallele Verstellelemente (auf jeder Seite je ein Verstellelement).

Nach einem weiteren Gedanken der Erfindung sind die Verstellelemente an einem Auflieger für eine Sattelzugmaschine angelenkt, wobei der Auflieger insbesondere zwei zueinander in der Höhe versetzte Ebenen aufweist, und wobei die Verstellelemente an der höheren Ebene angelenkt sind. Hierdurch bleibt mehr Raum für die Verstellung der Verstellelemente. Dabei trägt der Auflieger die Arbeitsmaschine oder letztere ist zugleich als Auflieger ausgebildet. Den beschriebenen Höhenversatz zweier Ebenen weisen beispielsweise sogenannte Gooseneck-Auflieger auf.

Nach der Erfindung ist das Raupenfahrwerk mit Hebeln an der niedrigeren Ebene des Aufliegers gehalten, insbesondere dort verschwenkbar. Dabei ist die Anordnung vorzugsweise derart gewählt, dass die Verstellrichtung (des Raupenfahrwerks) und die Längsrichtung der Hebel zueinander möglichst senkrecht sind. Genau genommen wird diese sogenannte Querposition (der Hebel) nur während der Verstellung passiert. Der Verstellweg sollte möglichst zu gleichen Teilen auf der einen Seite und auf der anderen Seite der Querposition verlaufen. Dies würde die besten Hebelverhältnisse beim Verstellen sichern. Bevorzugt sind auch Lösungen, bei denen mindestens ein Viertel oder sogar ein Drittel des Verstellweges auf einer Seite und entsprechend zwei Drittel bzw. drei Viertel auf der anderen Seite der Querposition verlaufen.

Nach einem weiteren Gedanken der Erfindung sind die Hebel zumindest benachbart zu Querträgern des Raupenfahrwerks an letzterem angelenkt. Das Raupenfahrwerk weist zumindest je einen vorderen und hinteren Querträger auf, insbesondere je ein Tragrohr. Zum Anlenken der Hebel sind parallel zu einer Längsebene ausgerichtete Bleche (Tragbleche) oder dergleichen mit den Trägern verbunden, insbesondere an die Tragrohre angeschweißt. Die Querträger sind miteinander verbunden durch zueinander parallele Längsträger. Die Einheit aus Querträgern und Längsträgern ist in sich steif, hängt mit Hilfe der Hebel an der Arbeitsmaschine im Übrigen bzw. an einem Auflieger-Rahmen und wird von den Verstellelementen bewegt.

Nach einem weiteren Gedanken der Erfindung sind ein Verstellelement und mindestens ein Hebel benachbart zu einem Längsträger am Raupenfahrwerk angelenkt. Vorzugsweise ist ein Verstellelement auf einer Seite des Querträgers zwischen Tragblechen gehalten, während ein Hebel auf der anderen Seite des Querträgers an diesem oder an entsprechenden Tragblechen gehalten ist. Zur Vermeidung einer Verwindung der Querträger können Verstellelemente und Hebel in derselben Längsebene (Ebene quer zum Querträger) angeordnet sein.

Im Rahmen der Erfindung liegt auch eine Arbeitsmaschine mit Raupenfahrwerk, wobei das Raupenfahrwerk in der Höhe relativ zur Arbeitsmaschine im Übrigen verstellbar ist. Grundsätzlich ist hier die Höhenverstellbarkeit des Raupenfahrwerks unabhängig vom Vorhandensein eines zusätzlichen Räderfahrwerks. Insbesondere in Verbindung mit den oben genannten weiteren Merkmalen ist eine mechanisch einfache und zuverlässige Höhenverstellung möglich, ohne dass dadurch die Neigung der Arbeitsmaschine zwangsläufig verstellt wird.

Weitere Merkmale der Erfindung ergeben sich aus den Ansprüchen und aus der Beschreibung im Übrigen.

Vorteilhafte Ausführungsbeispiele der Erfindung werden nachfolgend anhand von Zeichnungen näher erläutert. Es zeigen:

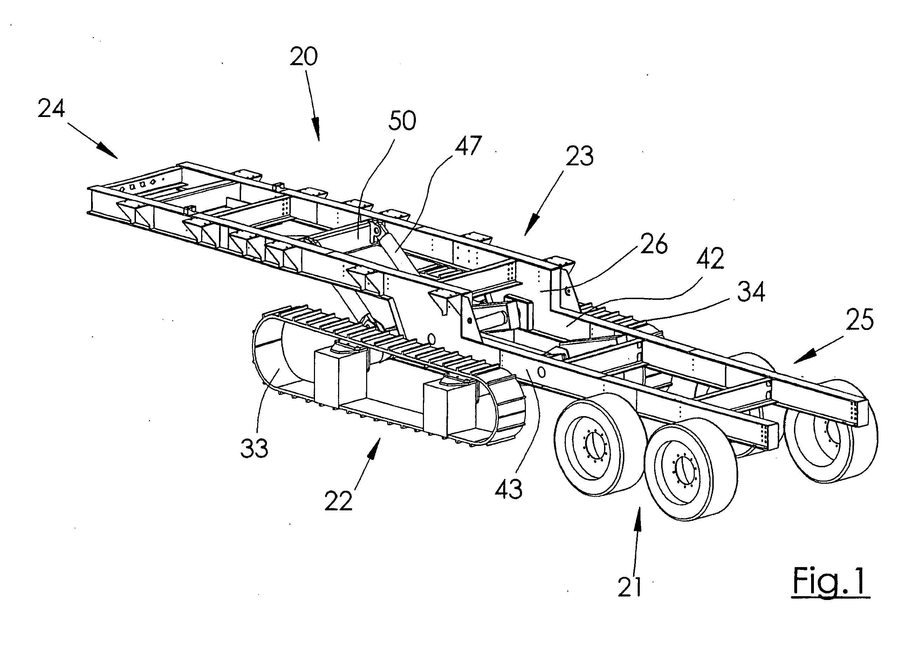

- Fig. 1: einen Auflieger, vorgesehen als Teil eine Arbeitsmaschine, bzw. Siebmaschine, in perspektivischer Darstellung, mit Räderfahrwerk und angehobenem Raupenfahrwerk,

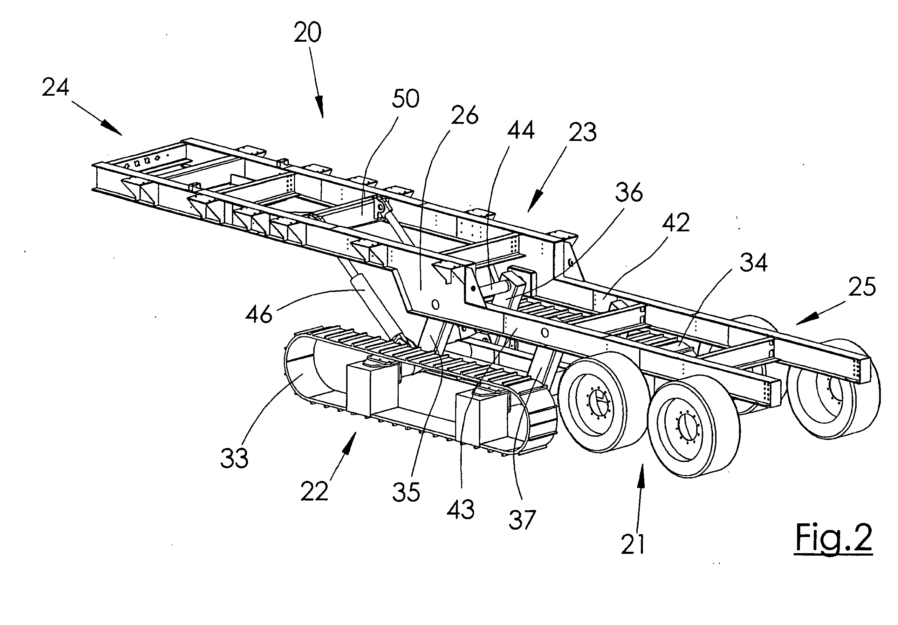

- Fig. 2: den Auflieger in perspektivischer Darstellung gemäß Fig. 1, jedoch mit abgesenktem Raupenfahrwerk,

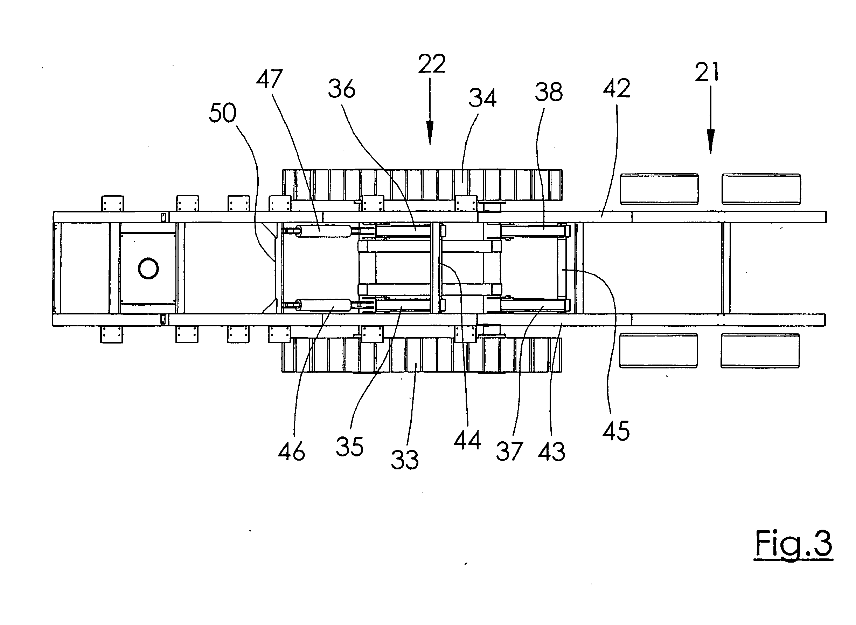

- Fig. 3: den Auflieger gemäß Fig. 1, jedoch in der Draufsicht,

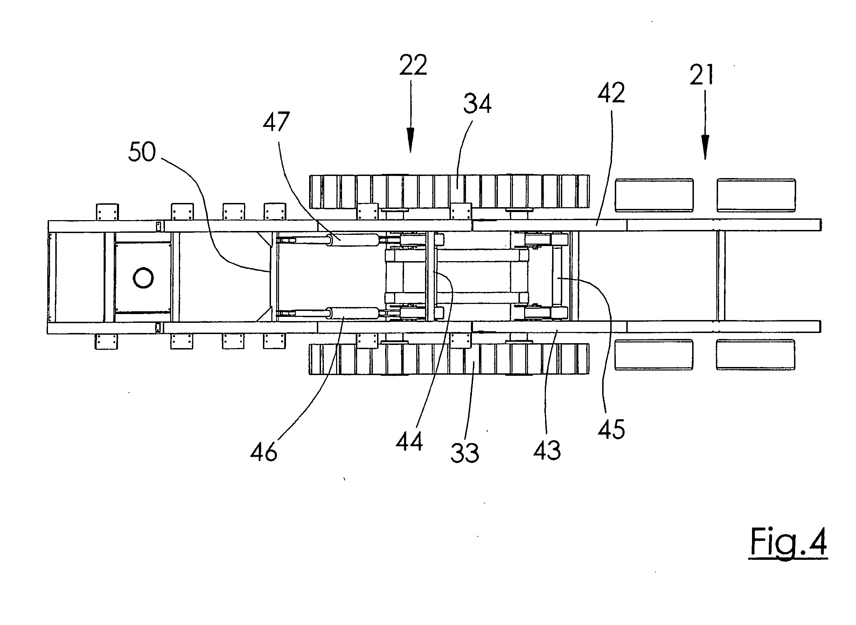

- Fig. 4: den Auflieger gemäß Fig. 2, jedoch in der Draufsicht,

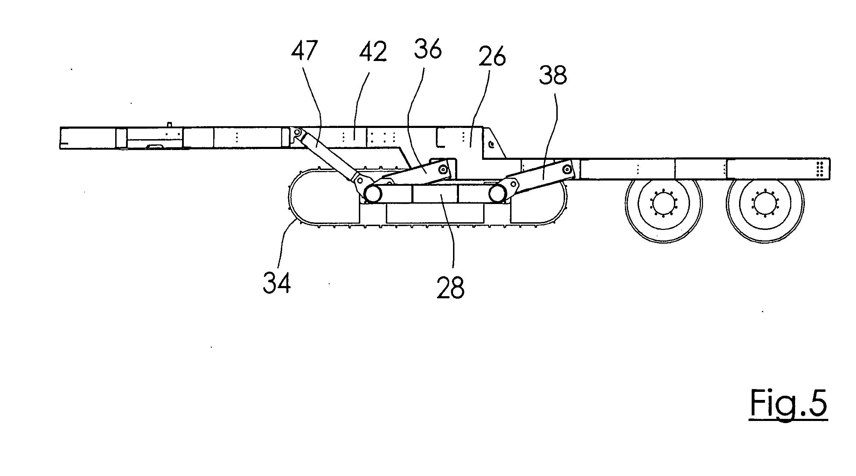

- Fig. 5: den Auflieger gemäß Fig. 1 und 3, jedoch im Längsschnitt,

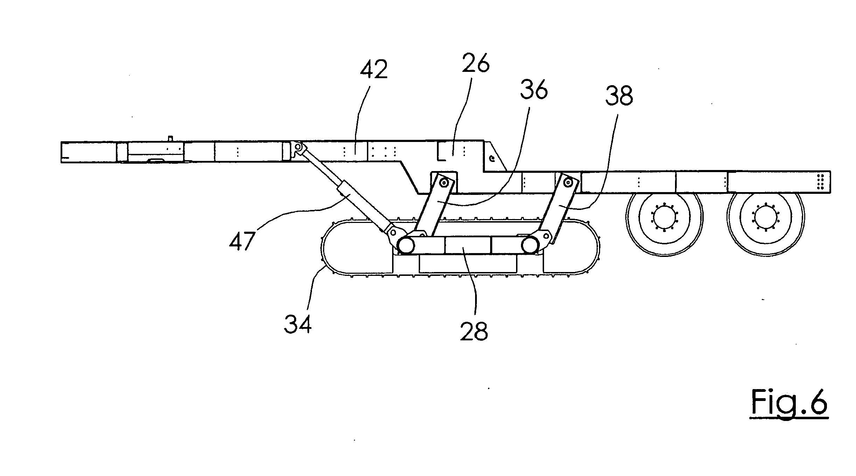

- Fig. 6: den Auflieger gemäß Fig. 2 und 4, jedoch im Längsschnitt,

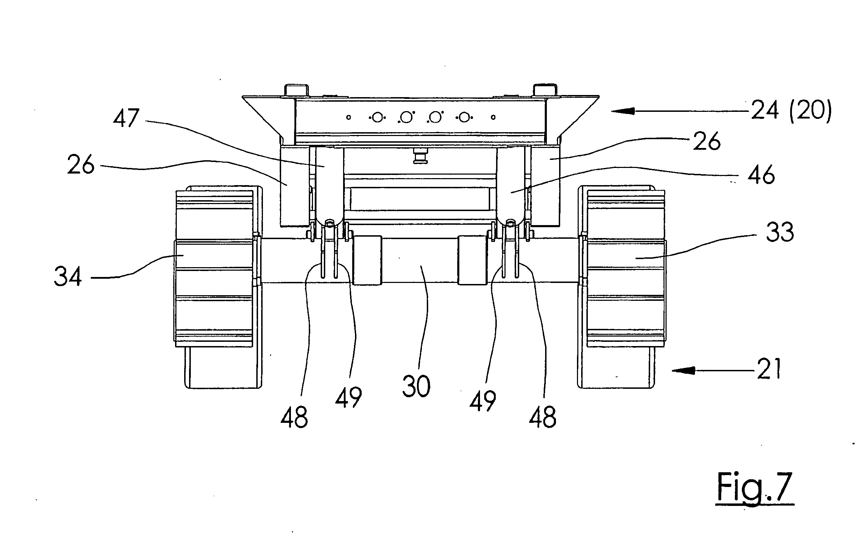

- Fig. 7: den Auflieger gemäß Fig. 1, 3 und 5, jedoch in Frontansicht,

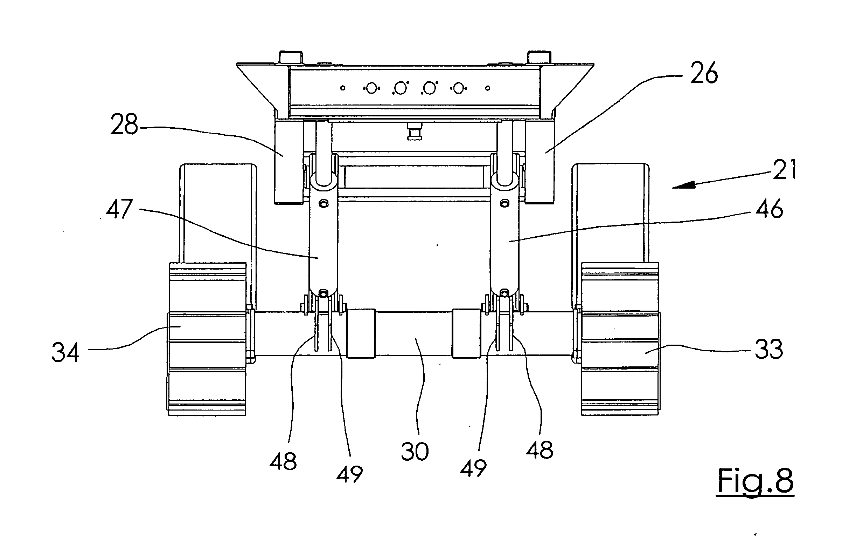

- Fig. 8: den Auflieger gemäß Fig. 2, 4, 6, jedoch in Frontansicht,
- Fig.9: einen Teil eines Auflieger-Rahmens in Seitenansicht und mit einem angehobenen Fahrwerks-Rahmen eines Raupenfahrwerks,
- Fig. 10: eine Darstellung entsprechend Fig. 9, jedoch mit abgesenktem Fahrwerks-Rahmen,
- Fig. 11: den Fahrwerks-Rahmen mit Hebeln und Verstellelementen entsprechend Fig. 9, jedoch in perspektivischer Darstellung,
- Fig. 12: den Fahrwerks-Rahmen entsprechend Fig. 10, jedoch in perspektivischer Darstellung.

Ein Auflieger 20 für eine Siebmaschine oder als Teil derselben ist nahe einem hinteren Ende mit einem Räderfahrwerk 21 und etwa mittig mit einem Raupenfahrwerk 22 versehen. Das Räderfahrwerk 21 ist am Auflieger 20 starr angeordnet, während das Raupenfahrwerk 22 an einem Auflieger-Rahmen 23 höhenverstellbar gehalten ist.

Der Auflieger-Rahmen 23 ist unterteilt in einen vorderen, höheren Teilrahmen 24 und einen hinteren, niedrigeren Teilrahmen 25. Die beiden Teilrahmen sind miteinander verbunden im Bereich eines nahezu Z-förmigen Mittelstücks 26 des Auflieger-Rahmens 23. Das Räderfahrwerk 21 ist dem hinteren, unteren Teilrahmen 25 zugeordnet.

Der Auflieger 20 dient zur Aufnahme einer Arbeitsmaschine. Ein vorteilhaftes Anwendungsgebiet ist die Aufnahme einer Siebmaschine, etwa zum Sieben von Abraum, Schutt, Geröll, Erde oder dergleichen. Derartige Arbeitsmaschinen sind üblicherweise mit einem Dieselaggregat als Antrieb für die Siebeinrichtungen und für vorhandene hydraulische Hilfsaggregate versehen.

In den Fig. sind die im Zusammenhang mit der Erfindung wichtigsten Bestandteile des Aufliegers dargestellt. Andere Details sind zum Teil nicht ersichtlich, so die Siebmaschine selbst und Details des Räderfahrwerks 21 und des Raupenfahrwerks 22.

Wesentliche Besonderheit ist das zusätzlich vorgesehene und zugleich höhenverstellbare Raupenfahrwerk 22. Ein Fahrwerks-Rahmen 27 des Raupenfahrwerks 22 weist zwei zueinander parallele Längsträger 28, 29 auf, die zwei rohrförmige Querträger 30, 31 miteinander verbinden. Zwischen den Längsträgern 28, 29 ist ein Abstand gebildet. Die Querträger 30, 31 stehen mit ihren freien Enden 32 über die Längsträger 28, 29 vor. Die freien Enden 32 tragen auf jeder Seite in nicht näher gezeigter Weise ein Laufwerk (Raupe) 33, 34.

Zur Höhenverstellung gegenüber dem Auflieger 23 ist der Fahrwerk-Rahmen 27 an der Unterseite des Auflieger-Rahmens 23 schwenkbar aufgehängt und zwar an zwei zueinander parallelen vorderen Hebeln 35, 36 und zwei zueinander parallelen hinteren Hebeln 37, 38. Die einzelnen Hebel 35-38 sind jeweils angelenkt an den Querträgern 30, 31 und zwar jeweils zwischen den Längsträgern 28, 29 und den freien Enden 32, aber jeweils mit nur möglichst geringem Abstand zu den Längsträgern 28, 29.

Die Hebel 35 bis 38 sind an den Querträgern 30, 31 jeweils zwischen Tragblechen 39, 40 gehalten. Dabei ist jeweils das Tragblech 39 dem freien Ende 32 zugewandt. Jedes aus zwei Tragblechen 39, 40 bestehende Tragblech-Paar ist mit einer Hebelachse 41 versehen, die parallel zu den Querträgern 30, 31 verläuft und um die die jeweils zugehörigen Hebel 35-38 schwenkbar sind. Die einzelnen Tragbleche 39, 40 sind vorzugsweise an die Querträger 30, 31 angeschweißt und erstrecken sind vorzugsweise in Ebenen parallel zu den Längsträgern 28, 29. Dabei sind die Tragbleche 39, 40 schräg aufwärts gerichtet in Richtung auf den hinteren Teilrähmen 25.

Den Tragblechen 39, 40 gegenüberliegend sind die Hebel 35-38 am Auflieger-Rahmen 23 gehalten, und zwar die hinteren Hebel 37, 38 am hinteren Teilrahmen 25 und die vorderen Hebel 35, 36 am Mittelstück 26. Der Auflieger-Rahmen 23 weist hierzu entsprechende Drehlager auf der Innenseite von Auflieger-Längsträgern 42, 43 auf. Zugleich sind die Hebel 35, 36 im Bereich der genannten Drehlager durch einen quergerichteten Stützträger 44 miteinander verbunden, analog hierzu die hinteren Hebel 37, 38 durch einen quergerichteten Stützträger 45.

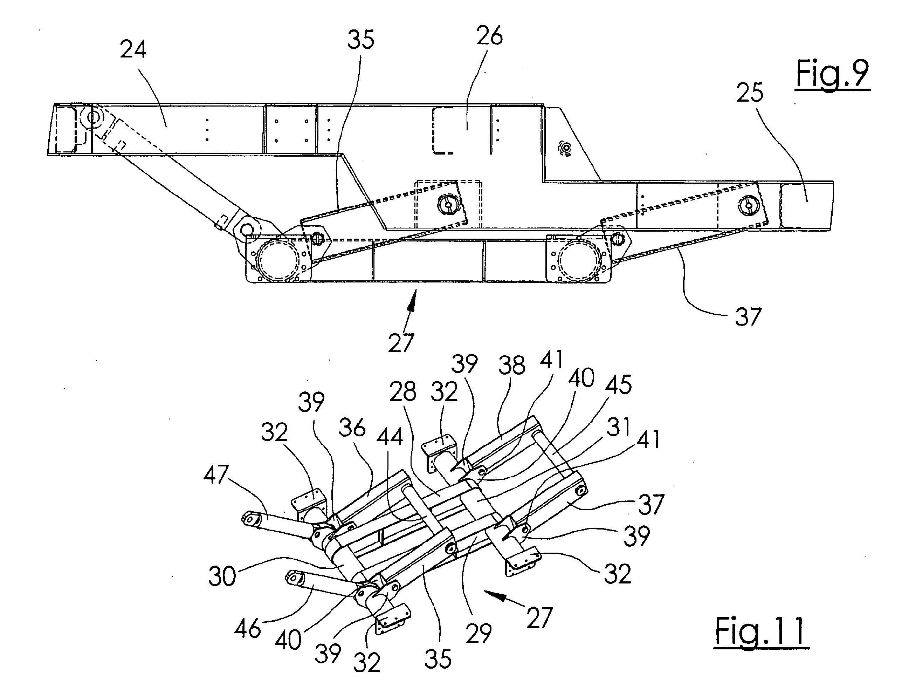

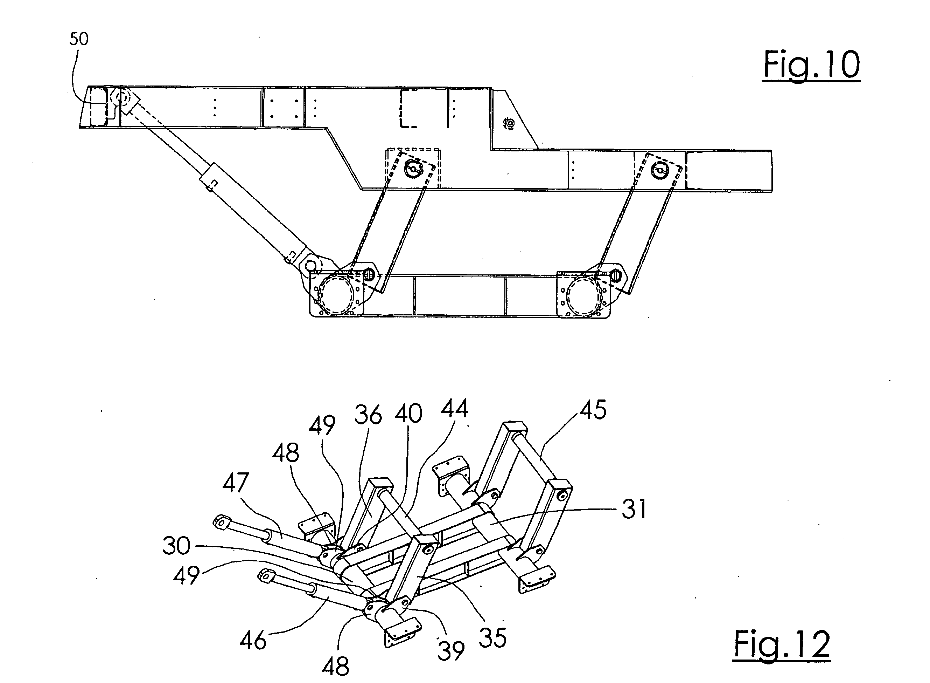

Der Fahrwerk-Rahmen 27 ist durch Verschwenken der Hebel 35-38 aus der in Fig. 9 gezeigten angehobenen Position absenkbar in die Position gemäß Fig. 10. Dabei schwenken die Hebel 35-38 etwa aus einer 8Uhr30-Stellung (Fig. 9) in eine 7Uhr-Stellung (Fig. 10).

Durchgeführt wird die Verstellung des Fahrwerk-Rahmens 27 mit Hilfe von zwei hydraulischen Verstellelementen 46, 47. Konkret handelt es sich bei dem vorliegenden Ausführungsbeispiel um Kolben-Zylindereinheiten, die zum Absenken des Raupenfahrwerks auf Druck und zum Anheben des Raupenfahrwerks auf Zug beansprucht werden. Die Verstellelemente 46, 47 sind am vorderen Querträger 30, den vorderen Hebeln 35, 36 gegenüberliegend, zwischen Tragblechen 48, 49 zueinander parallel angelenkt. Dabei sind die Tragbleche 48, 49 mit geringerem Abstand zueinander angeordnet als die jeweils gegenüberliegenden Tragbleche 39, 40 der vorderen Hebel 35, 36. Die Tragbleche 48, 49 erstrecken sich in Ebenen parallel zu den Tragblechen 39, 40 und zwischen den Ebenen der jeweils gegenüberliegenden Tragbleche 39, 40. Außerdem erstrecken sich die Tragbleche 48, 49 in eine Richtung etwa quer zur Richtung der Tragbleche 39, 40, nämlich zum vorderen Teilrahmen 24 hin, ebenso wie die Verstellelemente 46, 47. Diese sind zueinander parallel ausgerichtet, nämlich etwa quer zu den Hebeln 35, 36. In der eingezogenen Position des Raupenfahrwerks 22 gemäß Fig. 9 liegt zwischen den Verstellelementen 46, 47 und den Hebeln 35, 36 ein stumpfer Winkel (etwas größer als 90°) und in der abgesenkten Position gemäß Fig. 10 ein spitzer Winkel (kleiner 90°).

Die Verstellelemente 46, 47 sind am vorderen Teilrahmen 24, innenseitig der Auflieger-Längsträger 42, 43 an einem Querträger 50 schwenkbar gelagert, ebenso zwischen den Tragblechen 48, 49.

In der abgesenkten Stellung des Raupenfahrwerks 22 befindet sich dieses etwa unter dem Schwerpunkt der Arbeitsmaschine mit Auflieger insgesamt, so dass ein Verfahren mit Hilfe des Raupenfahrwerks 22 möglich ist. Das Räderfahrwerk 21 hat dann vorzugsweise keinen Bodenkontakt mehr.

### Bezugszeichenliste:

- 20: Auflieger
- 21: Räderfahrwerk
- 22: Raupenfahrwerk
- 23: Auflieger-Rahmen
- 24: vorderer Teilrahmen
- 25: hinterer Teilrahmen
- 26: Mittelstück
- 27: Fahrwerk-Rahmen
- 28: Längsträger
- 29: Längsträger
- 30: Querträger
- 31: Querträger
- 32: freie Enden
- 33: Laufwerk
- 34: Laufwerk
- 35: vorderer Hebel
- 36: vorderer Hebel
- 37: hinterer Hebel
- 38: hinterer Hebel
- 39: Tragblech
- 40: Tragblech
- 41: Achsen
- 42: Auflieger-Längsträger
- 43: Auflieger-Längsträger
- 44: Stützträger
- 45: Stützträger

- 46: Verstellelement
- 47: Verstellelement
- 48: Tragblech
- 49: Tragblech
- 50: Querträger

## Patentansprüche

1. Arbeitsmaschine, insbesondere Siebmaschine, mit Räderfahrwerk (21) und als oder mit einem Auflieger (20) für eine Sattelzugmaschine, sowie mit einem zusätzlichen Raupenfahrwerk (22), wobei der Auflieger (20) zwei zueinander in der Höhe versetzte Ebenen aufweist, **dadurch gekennzeichnet, dass** das Raupenfahrwerk (22) durch Verstellelemente (46, 47) und durch Schwenkbewegung an mindestens zwei Hebeln (35 bis 38) höhenverstellbar und aus einer vorderen, angehobenen Position in eine hintere abgesenkte Position verstellbar ist, wobei die Verstellelemente (46, 47) an der höheren Ebene des Aufliegers (20) angelenkt sind, und wobei das Raupenfahrwerk (22) mit den Hebeln (35 bis 38) an der niedrigeren Ebene des Aufliegers (20) gehalten ist.

2. Arbeitsmaschine nach Anspruch 1, **dadurch gekennzeichnet, dass** das Raupenfahrwerk (22) etwa unter dem Schwerpunkt der Arbeitsmaschine angeordnet ist.

3. Arbeitsmaschine nach Anspruch 1 oder 2, **dadurch gekennzeichnet, dass** das Raupenfahrwerk (22) durch auf Druck beanspruchbare Verstellelemente (46, 47) höhenverstellbar ist.

4. Arbeitsmaschine nach Anspruch 1 oder einem der weiteren Ansprüche, **dadurch gekennzeichnet, dass** die Hebel (35 bis 38) zumindest benachbart zu Querträgern (30, 31) des Raupenfahrwerks (22) angelenkt sind.

5. Arbeitsmaschine nach Anspruch 4, **dadurch gekennzeichnet, dass** ein Verstellelement (46, 47) und mindestens ein Hebel (35, 36) benachbart zu einem Längsträger (28, 29) am Raupenfahrwerk angelenkt sind.

## Claims

1. Working machine, in particular a screening machine, having a wheeled undercarriage (21) acting as or having a trailer (20) for a tractor unit, and having an additional crawler undercarriage (22), wherein the trailer (20) has two levels offset in height with respect to one another, **characterized in that** the crawler undercarriage (22) can be adjusted in height by adjusting elements (46, 47) and by a pivoting movement on at least two levers (35 to 38) and can be adjusted from a front raised position into a rear lowered position, wherein the adjusting elements (46, 47) are articulated on the higher level of the trailer (20) and wherein the crawler undercarriage (22) is held on the lower level of the trailer (20) by the levers (35 to 38).

2. Working machine according to Claim 1, **characterized in that** the crawler undercarriage (22) is arranged approximately under the centre of gravity of the working machine.

3. Working machine according to Claim 1 or 2, **characterized in that** the crawler undercarriage (22) can be adjusted in height by adjusting elements (46, 47) that can be subjected to compressive loading.

4. Working machine according to Claim 1 or one of the other claims, **characterized in that** the levers (35 to 38) are articulated at least adjacently to cross members (30, 31) of the crawler undercarriage (22).

5. Working machine according to Claim 4, **characterized in that** one adjusting element (46, 47) and at least one lever (35, 36) are articulated on the crawler undercarriage adjacently to a longitudinal beam (28, 29).

## Revendications

1. Machine de travail, en particulier séparateur, comprenant un support de roues (21) et en tant que, ou avec un, semi-remorque (20) pour un tracteur de semi-remorque, ainsi qu'un support de chenille (22) supplémentaire, le semi-remorque (20) présentant deux plans décalés l'un par rapport à l'autre en hauteur, **caractérisé en ce que** le support de chenille (22) peut être déplacé en hauteur par des éléments de réglage (46, 47) et par un mouvement de pivotement sur au moins deux leviers (35 à 38), et peut être déplacé d'une position avant soulevée dans une position arrière abaissée, les éléments de réglage (46, 47) étant articulés au niveau du plan supérieur du semi-remorque (20), et le support de chenille (22) étant maintenu avec les leviers (35 à 38) sur le plan inférieur du semi-remorque (20).

2. Machine de travail selon la revendication 1, **caractérisée en ce que** le support de chenille (22) est disposé approximativement sous le centre de gravité de la machine de travail.

3. Machine de travail selon la revendication 1 ou 2, **caractérisée en ce que** le support de chenille (22) peut être réglé en hauteur par des éléments de réglage (46, 47) pouvant être sollicités en pression.

4. Machine de travail selon la revendication 1, ou selon l'une quelconque des autres revendications, **caractérisée en ce que** les leviers (35 à 38) sont articulés au moins à côté des supports transversaux (30, 31) du support de chenille (22).

5. Machine de travail selon la revendication 4, **caractérisée en ce qu'**un élément de réglage (46, 47) et au moins un levier (35, 36) sont articulés à côté d'un support longitudinal (28, 29) sur le support de chenille.
